# EUROPEAN PATENT APPLICATION

(11) **EP 4 299 180 A1**
(43) Date of publication of application: **03.01.2024**
(21) Application number: 22716845.7
(22) Date of filing: 22.02.2022
(51) Int. Cl.: B02C 4/38, B02C 4/06, B02C 25/00

(54) **MODULAR SYSTEM FOR GRAIN CRUSHER, SYSTEM AND METHOD FOR CRUSHING GRAIN**

(30) Priority: 23.02.2021 BR 102021003363
(71) Applicant: Bunge SA, 1206 Geneva (CH)
(72) Inventor: SARAIVA DA SILVA, Ramiro, 88037-260 Florianópolis - SC (BR); OLIVEIRA CABEÇA NEVES, Carlos Fernando, 88034-389 Florianópolis - SC (BR); DIAS DE CARVALHO, Sidney Roberto, 88040-620 Florianópolis - SC (BR); MONTEIRO VERAS, Rafael, 88040-360 Florianópolis - SC (BR); BONNARD, Renan, 880510-010 Florianópolis - SC (BR)
(74) Representative: Keltie LLP
(86) International application number: PCT/BR2022/050053
(87) International publication number: WO 2022/178605

(57) **Abstract**

This invention refers to a grain flaking modular system, a grain flaking system, and a method that produces a grain flake within a predetermined specification. The grain flaking modular system comprises: valves (124); a PLC (130) connected to the valves (124); and an external optimization unit (140) connected to the PLC (130), wherein the external optimization unit (140) is configured to define a pressure reference (A). The grain flaking system (100) comprises: flaking rollers (110); and a programmable logic controller, PLC (PLC), configured to: obtain a pressure reference (A), and control a flaking pressure through the pressure reference (A) obtained. The grain flaking method comprises: obtaining (210) the pressure reference; applying (220) a flaking pressure to a flow of grains, wherein the flaking pressure is defined through the pressure reference obtained; and adjusting (230) the pressure reference.

## Description

This invention refers to a grain flaking mill modular system, a grain flaking system, and a method that produces a grain flake within a predetermined specification.

### Description of the State of the Art

Systems and methods for grain flaking, for example, soybeans, which are widely known and used at the state of the art involve flaking the flow of grains, measuring the grain flakes produced thereby, and adjusting the flaking system according to the outcomes of the measurement. The adjustment is performed in order to ensure that the grain flake resulting from the flaking process is compliant with the design specifications. Systems constituting the state of the art perform the measurements and adjustments in a long-automated manner, through an operator.

The grain flaking systems developed by the grain processing industry are generally comprised of devices that require the constant presence of operators, who are in charge of the operations and measurement of the output. After the measurement, the operator may decide whether or not the product obtained complies with the desired specifications for that specific product. If non-compliant, the device must be adjusted by hand, in order to ensure that subsequent products comply with the desired specifications.

Furthermore, several flaking methods and methods for operating known systems are described at the state of the art. These methods also repair input from an operator to adjust the process and adapt the resulting product. This need leads to dependence on a skilled worker who is trained and qualified to handle this job.

As a result of the above-mentioned needs, the presence of human errors may be noted in systems and methods constituting the state of the art, associated with the need for input from a skilled worker. For example, mention may be made of inaccurate adjustments of the devices, the limited frequency of adjustments, related to the high cost of each adjustment, fraud, etc. These errors affect product quality and the efficiency of the flaking process.

An example of soybean flaking equipment constituting the state of the art is described in the Brazilian utility model patent document BRMU8401072-0. This document describes a technical array for soybean flaking equipment that is comprised of a base with bearings, flaking rollers, a feed hopper, geared motors, and frequency inverters controlled by a programmable logic controller. However, the equipment still requires an operator to handle the man-machine interface and define the operations to be performed. There is no automatic adaptation of the equipment or the grain flaking process, based on the generated product. The operator must tell the equipment which operations are to be performed.

Looking at the teachings at the state of the art, the known processes and devices do not describe a system or a method able to handle a grain flaking process and continuously and automatically adjust the pressure applied to the grains, based on the results obtained, such as, for example, information on grain flake thickness. Consequently, the state of the art does not encompass any efficient and reliable way of producing grain flakes without constant monitoring and intervention by operators.

Documents constituting the state of the art also make no mention of controlling the grain flow from the feed hopper continuously and automatically, based on the results obtained for the grain flakes and the pressure applied between the rollers in a flaking system.

Documents constituting the state of the art also do not describe a modular system for installation and/or application in existing flaking mill models, that function, for example, manually with input from an operator.

### Purposes of the Invention

In view of the problems described at the state of the art, the purpose of this invention is to provide a system and a grain flaking method that can adjust the characteristics of the end product, based on the characteristics obtained in products processed previously, in other words, for example, adjusting the thickness of a grain flake to be flaked, on the basis of information on the thickness of a grain flake that was milled previously.

The purpose of this invention is also to provide a system and a grain flaking method also able to adjust the inflow rate of the grain flow from a feed hopper, based on the characteristics of the flaked grain flakes and the flaking pressure.

Furthermore, another purpose of this invention is to provide a system and a grain flaking method that can handle pressure and flow rate adjustments more frequently than other known systems and methods, resulting in a more responsive system and method.

Another purpose of this invention is to handle the adjustments and controls continuously and automatically during the flaking process, resulting in a flaking process that is more efficient, accurate, and homogeneous.

A purpose of an embodiment of this invention is to supply a modular system applicable to existing grain flaking mills.

### Brief Description of the Invention

This invention relates to a grain flaking mill modular system that comprises: valves; a PLC connected to the valves; and an external optimization unit connected to the PLC. The external optimization unit is configured to define the pressure reference, based on the characteristics of the grain to be flaked. The PLC is configured to receive the pressure reference from the external optimization unit, calculate the flaking pressure on the basis of the pressure reference and activate the valves if the flaking pressure needs to be adjusted.

The modular system may be fitted onto an existing flaking mill model by adapting the piping to hold the valves. The characteristics of the grain to be flaked may include the moisture content and temperature of the grain to be flaked. The pressure reference may also be defined from data on pressure, hopper feed speed, the pressure or the distance between the rollers, the vibration of the mechanical parts, and the thickness of the flaked grain.

This invention also addresses a grain flaking system that comprises: flaking rollers; and a programmable logic controller, PLC, configured to: obtain the pressure reference, and control the flaking pressure through the pressure reference obtained, wherein the pressure reference is defined according to characteristics of a grain flake milled by the flaking rollers, and wherein the flaking pressure is controlled continuously and automatically.

The pressure reference may come from an external optimization unit. The characteristics of the grain flake comprise at least one thickness of the grain flake. The pressure reference may additionally be defined according to the values measured by the pressure sensors, the hopper feed speed, the moisture content, and the temperature of the grain to be flaked, the pressure or distance between the rollers, and the vibration of the mechanical parts. The flaking pressure is the pressure between the flaking rollers during the flaking process. The flaking pressure may be controlled through hydraulic actuators, which turn the flaking rollers. The system may also comprise valves that control the flow of the hydraulic fluid to the hydraulic actuators, wherein the valves are controlled by the PLC.

This invention also addresses a grain flaking method that comprises the steps of: obtaining the pressure reference; applying the flaking pressure to the flow of grains, wherein the flaking pressure is defined through the pressure reference obtained; and adjusting the pressure reference, should the characteristics of the grain flakes not be compliant with the desired specifications, wherein the step of adjusting the pressure reference is handled continuously and automatically.

The step of adjusting the pressure reference may also be performed from the values measured by pressure sensors, the hopper feed speed, the moisture content, and the temperature of the grain to be flaked, the pressure or distance between the rollers, and the vibration of the mechanical parts.

### Brief Description of the Drawings

This invention will be described in greater detail below, based on an example of its embodiment, shown in the drawings. The Figures display:
Figure 1 - is a schematic diagram of an embodiment of the grain flaking system addressed by this invention;
Figure 2 - is a conceptual diagram of an embodiment of the grain flaking system addressed by this invention; and
Figure 3 - is a sequence of steps for an embodiment of the grain flaking method addressed by this invention.

### Detailed Description of the Drawings

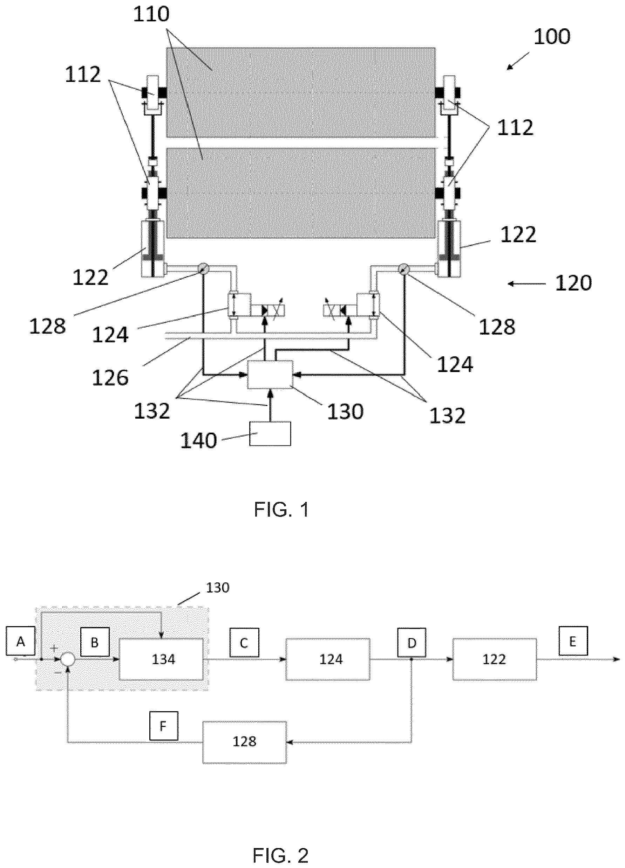

Figure 1 shows a schematic diagram of the grain flaking system 100 according to an embodiment of this invention. In this example of an embodiment, the grain flaking system 100 comprises flaking rollers 110, a roller drive system 120, a programmable logic controller (PLC) 130, and an external optimization unit 140.

In this embodiment, the flaking rollers 110 of the grain flaking system 100 are cylinders attached to bearings 112, that allow the rotation of the flaking rollers 110 along their longitudinal axes. The rotation of the rollers 110 is powered by roller rotation motors (not shown). The bearings 112, which define the position of the ends of the axes of the flaking rollers 110, are movable in a direction transversal to the longitudinal axis of the flaking roller. This freedom of movement of the bearings 112 allows movement of the flaking rollers 110 in a direction that is crosswise to their longitudinal axes. Consequently, the grain flaking system 100, described in this embodiment, can move the flaking rollers 110 closer and further away from each other, as required by the system.

During the operation of the grain flaking system 100, movements towards and away from each other of the flaking rollers 110 cause variations in the pressure applied to the flow of grains running between the flaking rollers 110, in other words, the flaking pressure. The flaking pressure, which is the pressure between the flaking rollers 110 during the flaking process, affects the characteristics of the grain flakes resulting from the flaking process, such as, for example, the grain flake thickness. By allowing the adjustment of the flaking pressure, this invention allows the characteristics of the grain flake, such as the flake thickness, to be adjusted by the system according to the desired specifications of the end product.

The movement of the flaking rollers 110 is handled through a roller drive system 120. In one embodiment, the roller drive system 120 comprises actuators 122, valves 124, hydraulic fluid, piping 126, and pressure sensors 128. Other types of roller drive systems may also be used, such as, for example, a roller drive system 120 that uses position sensors instead of pressure sensors 128.

In one embodiment, the actuators 122 are hydraulic actuators. The hydraulic actuators 122 are activated by the hydraulic fluid in the roller drive system 120. When the hydraulic fluid pressure alters, the hydraulic actuators 122 move, and consequently move the flaking rollers 110. For example, in one embodiment, when the hydraulic fluid pressure increases, the pressure in the hydraulic actuators 122 rises, and the hydraulic actuators 122 move. When moved, the hydraulic actuator moves at least one flaking roller in a direction transversal to its longitudinal axis. This transversal movement of the flaking rollers 110, as already mentioned, allows the flaking rollers 110 to move towards and away from each other.

For example, when the hydraulic fluid pressure on one side of the hydraulic actuator 122 piston becomes higher than on the other side, due to either a larger opening of the proportional pressure regulator valve 124, or through a slower grain flow rate between the rollers 110, the hydraulic actuator in order to bring the rollers 110 closer together.

On the other hand, when the flow rate of grains milled by the flaking mill increases, or when a proportional pressure regulator valve closes, in order to lower the hydraulic pressure, the actuators 122 move the bearings 112 of the movable roller 110, thus moving the rollers 110 further apart.

In one embodiment, the hydraulic fluid pressure is controlled by the valves 124. In this embodiment, the valves 124 that ensure suitable pressure values for the hydraulic actuators 122, are pressure-reducing hydraulic valves proportional. The hydraulic valves 124 are controlled by the PLC 130 and mounted on the piping 126 that carries the hydraulic fluid, close to the hydraulic actuators 122.

In turn, the pressure sensors 128 are sensors configured to measure the hydraulic pressure of the roller drive system 120. In one embodiment, the pressure sensors 128 are positioned to measure the pressure in the piping 126 between the hydraulic actuators 122 and the hydraulic valves 124. Although the use of pressure sensors 128 is described, other types of sensors may also be used instead of pressure sensors 128 to define the flaking pressure, such as, for example, position sensors configured to measure the distance between the flaking rollers 110.

In one embodiment, the hydraulic valves 124 and the pressure sensors 128 are connected to the PLC 130, as shown in the example given in Figure 1. These connections 132 are connections that allow signals to be transmitted among the above-mentioned elements, with this signal transmission occurring through physical or remote connections, not being limited to any specific signal transmission type.

In this example of an embodiment, the connections 132 transmit electrical signals among the connected elements. The PLC 130 receives information from the pressure sensors 128 on the pressure readings performed and sends instructions to the hydraulic valves 124 that control the activation of the hydraulic actuators 122. Consequently, the PLC 130 is configured to obtain the hydraulic pressure, calculate the flaking pressure through the hydraulic pressure obtained and control the flaking pressure of the system through the hydraulic valves 124. In order to handle this control, the PLC 130 also receives pressure reference A from the external optimization unit 140.

The external optimization unit 140 defines the pressure reference A on the basis of the characteristics of the grain flake milled by the flaking rollers 110. The external optimization unit 140 is a machine configured to analyze the characteristics of the grain flake produced, such as the grain flake thickness for example, or receive the characteristics of the grain flake obtained through means outside the system 100, and determine whether the characteristics of the grain flake are compliant with the desired specifications. Based on the analyzed characteristics, the external optimization unit 140 defines the pressure reference A for the purpose of adjusting the flaking pressure, should any grain flake characteristic need to be altered, in order to comply with the desired specifications.

In one embodiment, the PLC 130 receives information from the external optimization unit 140, such as, for example, the pressure reference A, in order to then define, through a control logic, the signals that will be sent to the hydraulic valves 124. The signals, which control the hydraulic valves 124, also control the flaking pressure of the grain flaking system 100. By altering the flaking pressure, the PLC 130 consequently alters the characteristics of the grain flake.

In one embodiment, the pressure reference A is defined by the external optimization unit 140, based on a correlation between data on pressure 128, the roller rotation motor belt, the hopper feed speed, and the characteristics of the grain to be flaked, such as the moisture content and temperature, the distance between the rollers, vibration, temperature, and the characteristics of the flaked grain, such as thickness. The characteristics of the grain to be flaked are the characteristics of the cracked grain before milling by the rollers of the grain flaking system 100, and the thickness of the flaked grain after milling by the rollers of the grain flaking system 100.

The external optimization unit 140 can estimate the thickness of the flaked grain on the basis of the other data, as mentioned, and can suggest the pressure reference A for correcting the thickness should it be off-spec. The thickness of the flaked grain may be estimated from the above-mentioned values and with no need for it to be measured and inserted into the external optimization unit 140.

In another alternative embodiment, the PLC 130 is configured to receive, in addition to the information mentioned for the two embodiments described above, a flow rate reference from the external optimization unit 140. The flow rate reference is used by the PLC 130 to control the inflow rate of the grain flow through a feed hopper. The feed hopper is a variable speed feed hopper that receives a speed reference from the PLC 130, wherein the speed reference is defined through the flow rate reference sent from the external optimization unit 140 to the PLC 130.

In this alternative embodiment, the inflow rate of the grain flow is altered when a maximum hydraulic pressure from the roller drive system 120 is reached. The maximum hydraulic pressure is the maximum pressure at which the roller drive system 120 can operate correctly. In this case, as the hydraulic pressure is at its ceiling and cannot be increased any more in order to alter the flaking pressure, it is necessary to change the inflow rate of the grain flow. To do so, the external optimization unit 140 provides the flow rate reference that, through the PLC 130, is used to define the hopper feed speed reference.

In one example of this embodiment, when the maximum hydraulic pressure is reached and the flaking pressure must be increased in order to ensure that the grain flake complies with the desired specifications, the feed hopper receives the instruction from the PLC 130 to reduce the inflow rate of the grain flow and best ensure compliance with the desired specifications of the end product.

The pressure reference A and the flow rate reference (in the embodiment that includes this reference) are sent to the PLC 130 continuously and automatically. There is no need for the involvement of an operator and the flaking process is performed in a more efficient, accurate, and homogeneous manner. Furthermore, the described characteristics allow more frequent pressure and flow rate adjustments, resulting in a more responsive system.

Figure 2 shows a conceptual diagram of the grain flaking system according to an embodiment of this invention. Shown in Figure 2, this embodiment represents a conceptual diagram of the embodiment shown in Figure 1 for each side of the flaking rollers 110. The control loops for both sides of the flaking rollers 110 have identical logics. However, the input parameters may be different, depending on the analysis generated by the external optimization unit 140, according to the pressure sensors 128 readings, the roller rotation motor belt, the hopper feed speed, the characteristics of the grain to be flaked, such as the moisture content and temperature, the distance between the rollers, vibration, temperature, and the characteristics of the flaked grain, such as thickness.

In the configuration shown in Figure 2, a pressure E between the rollers 110 is provided by the actuator 122. Each control algorithm generates an appropriate control signal C as required by the hydraulic valves 124, in order to ensure that the pressure E between the flaking rollers 110 is attained. This value is proportional to an error B between the pressure reference A generated by the external optimization unit 140 and the pressure F between the flaking rollers 110, measured by the pressure sensor 128 through the pressure D adjusted by the valve 124.

The external optimization unit 140 uses mathematical models to correlate the values measured by the pressure sensors 128, the roller rotation motor belt, the hopper feed speed, the characteristics of the grain to be flaked, the distance between the rollers, vibration, temperature, and the characteristics of the flaked grain, such as thickness and consequently generate pressure references A for the flaking rollers 110 corresponding to what is being monitored in real time. These generated pressure references A are sent to a pressure controller 134 in the PLC 130 and analyzed according to the errors B to generate the control signal C.

For example, at a specific moment, if the pressure sensors 128, the roller rotation motor belt, the hopper feed speed, the characteristics of the grain to be flaked, the distance between the rollers, vibration, temperature, and the characteristics of the flaked grain are presenting specific values, the external optimization unit 140 will define the ideal pressure reference A through mathematical models for the current process behavior, thus ensuring the quality of the grain flaking process according to the requirements established for the flaking mill operations.

The mathematical models used may be based on logics defined by artificial intelligence, which extends beyond the scope of this invention. These models may be based on artificial intelligence trained through a dataset correlating data on pressure 128, the roller rotation motor belt, the hopper feed speed, the characteristics of the grain to be flaked, the distance between the rollers, vibration, temperature, and the characteristics of the flaked grain. Mathematical models and value correlations performed in a simpler manner may also be used.

In an example of an application, the moisture content of the grain to be flaked may increase during a certain period of time. In this case, the roller rotation motor belt will increase, and may reach a level outside the normal operating range, with the flaked grain thickness being non-compliant. Consequently, the model estimates the thickness of the grain and suggests a new pressure reference A that is sufficient to separate the rollers, bringing the roller rotation motor belt for the system back to normal, and bringing the flaked grain back to compliance with the standard.

In one embodiment, the system addressed by this invention is a modular system for automating a new or existing grain flaking mill. In this embodiment, the modular system addressed by this invention may be connected to or installed on existing grain flaking mill models that are not automated. Consequently, the modular system addressed by this invention may transform manually adjustable flaking mills with actuator-driven rollers into flaking mills that can adjust distances between rollers continuously and automatically.

In this embodiment, the grain flaking mill modular system addressed by this invention comprises the roller drive system 120, the PLC 130, and the external optimization unit 140. This embodiment does not include the rollers and actuators described previously, as these elements are already included in an existing flaking mill that will be fitted with the modular system addressed by this invention.

In this embodiment, the roller drive system 120 comprises the valves 124 and the pressure sensors 128 already described for other embodiments of this invention.

In order to ensure the modularity of the modular system addressed by this invention and its installation on existing flaking mills, the piping of an existing flaking mill is adapted for mounting the valves 124 and the pressure sensors 128. Consequently, the actuators already installed on the flaking mill are activated through actuation by the PLC 130 and the external optimization unit 140.

The valves 124 and the pressure sensors 128 for the roller drive system 120 have already been described in detail above, for other embodiments, with their characteristics and functions being the same for the modular system addressed by this invention. The same applies to the PLC 130 and the external optimization unit 140, which is endowed with characteristics that have already been described.

The external optimization unit 140 is one of the components of the modular system described in this embodiment where modularity is possible. To do so, the relationships for data on pressure 128, the roller rotation motor belt, the hopper feed speed, the characteristics of the grain to be flaked, such as the moisture content and temperature, the distance between the rollers, vibration, temperature, and the characteristics of the flaked grain, such as thickness, may be adjusted, according to the needs of each flaking mill and the desired end product.

In one embodiment of the modular system, the mathematical models used are artificial intelligence models that can be trained to adapt to different grain flaking mills where the modular system can be installed or applied. Mathematical models and value correlations performed in a simpler manner may also be used.

An example of a non-limiting application of this invention is described below, for a situation seeking a value of 0.39 mm for the flaked grain thickness. The modular system is applied to the flaking mill model, where the moisture content and temperature of the cracked grain to be flaked are 9.5% and 65°C respectively, the roller rotation motor belt is at 140 A, the feed hopper speed is at 60%, the pressure between the rollers is at 55 bar and the vibration of the mechanical parts is at 0.006 mm/s. In this case, the external optimization unit 140 will estimate, based on the data mentioned above, a value of 0.39 mm for the flaked grain thickness as it leaves the flaking mill. As this thickness is within the acceptable range of 0.35 mm and 0.40 mm, there is no need for the external optimization unit 140 to generate a new pressure reference A.

Still according to this non-limiting example, should the moisture content of the grain to be flaked increase, due to some outside factor, to approximately 11% and the temperature of the grain to be flaked drop to approximately 50°C, the roller drive motor belt and the vibration of the mechanical parts will increase to approximately 145 and 0.009 mm/s respectively, assuming that the feed hopper speed and the pressure between the rollers are unalterable. In this case, the external optimization unit 140 will estimate, based on the data mentioned above, a value of approximately 0.27 mm for the flaked grain thickness as it leaves the flaking mill. As the thickness is outside the acceptable range of 0.35 mm to 0.40 mm, a new pressure reference A of approximately 50 bar will be generated by the external optimization unit 140 for moving the rollers further apart, bringing the belt back to normal and the flaked grain back into compliance with the desired standard.

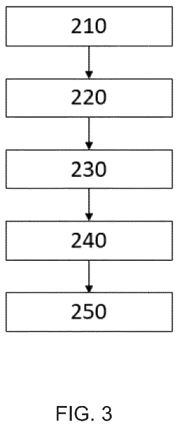

Figure 3 shows a grain flaking method according to an embodiment of this invention. In this embodiment, the sequence of steps begins with a step of obtaining 210, the pressure reference in the PLC, wherein the pressure reference is provided by the external optimization unit. The pressure reference is used by the PLC to calculate the hydraulic pressure of the roller drive system. The hydraulic pressure is used to define the flaking pressure to be used by the system in order to attain the grain flake characteristics that comply with the desired specifications.

Next, the step of applying 220 the flaking pressure on grain flow is performed. The applied flaking pressure is defined by the PLC through the pressure reference provided by the external optimization unit. The flaking pressure is the pressure imposed on the grain flow running between the flaking rollers during the flaking process. The PLC controls the flaking pressure by manipulating the pressure-reducing hydraulic valves, whereby the movable roller moves towards or away from the fixed roller, in order to obtain a flake within the desired specifications.

In one embodiment, the grain flaking method comprises the step of adjusting 230 the pressure reference. This step is performed if the characteristics of the grain flakes obtained from the flaking process are not compliant with the desired specifications. The design specifications may be predefined in the PLC or through other devices, such as the external optimization unit. Furthermore, the pressure reference mainly adjusted according to the values measured through the pressure sensors 128, the roller rotation motor belt, the hopper feed speed, the characteristics of the grain to be flaked, such as the moisture content and temperature, the distance between the rollers, vibration, temperature, and the characteristics of the flaked grain, such as thickness. The external optimization unit can estimate the thickness of the flaked grain on the basis of the other data, as mentioned, and can suggest the pressure reference A for correcting the thickness should it be off-spec.

This step of adjusting 230 the pressure reference on the basis of the above-mentioned data is performed continuously and automatically, with no need for any operator involvement to control the adjustment. This is because the desired specifications are predefined within the system and the flaking pressure can be controlled continuously and automatically by the PLC.

In an alternative embodiment, the grain flaking method also comprises a step of obtaining 240, the flow rate reference in the PLC, wherein the flow rate reference is provided by the external optimization unit. The flow rate reference obtained is used to allow the system to perform a step of defining 250 the inflow rate of the grain flow. The step of defining 250 the inflow rate of the grain flow comprises calculating the speed reference in the PLC through the flow rate reference. The speed reference is then used to control the feeding speed from the feed hopper and consequently the inflow rate of the grain flow.

In this alternative embodiment, the step of obtaining 240 the flow rate reference is performed if the grain flake characteristics are not compliant with the predefined specifications and the flaking pressure cannot be increased through the pressure reference. In this case, the flaking pressure must be altered, in order to comply with the predefined specifications. However, if the pressure reference cannot be used to increase the flaking pressure, the flow rate reference must be used. An example of a situation wherein the pressure reference cannot be used to increase the flaking pressure occurs when reaching the maximum hydraulic pressure from the roller drive system. The maximum hydraulic pressure prevents an increase in the flaking pressure through the pressure reference, whereby the flaking pressure must be altered through the flow rate reference.

Similar to the step of adjusting 230 the pressure reference, the steps of obtaining 240 the flow rate reference and defining 250 the inflow rate of the grain flow are performed continuously and automatically. Thus, the grain flaking method addressed by this invention is performed efficiently, in a precise and homogeneous manner. Furthermore, the described steps allow more frequent pressure and flow rate adjustments, resulting in a more responsive method.

Having described examples of embodiment, it is to be understood that the scope of the present invention embraces other possible variations, being limited only by the contents of the accompanying claims, which include the possible equivalents.

## Claims

1. Grain flaking modular system, **characterized in that** it comprises:
valves (124);
a PLC (130) connected to the valves (124); and
an external optimization unit (140) connected to the PLC (130),
wherein the external optimization unit (140) is configured to define a pressure reference (A), based on the characteristics of the grain to be flaked, wherein the PLC (130) is configured to receive the pressure reference (A) from the external optimization unit (140), calculate a flaking pressure based on the pressure reference (A) and activate the valves (124) if the flaking pressure needs to be adjusted.

2. Modular system, according to Claim 1, **characterized in that** the modular system is associated with an existing flaking mill model by adapting the piping to hold the valves (124).

3. Modular system, according to Claim 1 or 2, **characterized in that** the characteristics of the grain to be flaked include the moisture content and temperature of the grain to be flaked.

4. Modular system, according to any one of the previous Claims, **characterized in that** the pressure reference (A) is also defined, based on pressure data, hopper feed speed, pressure or distance between the rollers (110), vibration of mechanical parts and thickness of flaked grain.

5. Grain flaking system (100), **characterized in that** it comprises:
flaking rollers (110); and
a programmable logic controller, PLC, (130) configured to:
obtain a pressure reference (A), and
control flaking pressure through the pressure reference (A) obtained, wherein the pressure reference (A) is defined according to characteristics of a grain flake milled by the flaking rollers (110), and wherein the flaking pressure is controlled continuously and automatically.

6. System (100), according to Claim 5, **characterized in that** the pressure reference (A) comes from an external optimization unit (140).

7. System (100), according to Claim 5 or 6, **characterized in that** the characteristics of the grain flake comprises a thickness of the grain flake.

8. System (100), according to any one of Claims 5 to 7, **characterized in that** the pressure reference (A) is additionally defined according to the values measured by the pressure sensors (128), the roller rotation motor belt, the hopper feed speed, the characteristics of the grain to be flaked, the distance between the rollers, vibration, temperature, and the characteristics of the flaked grain.

9. System (100), according to any one of Claims 5 to 8, **characterized in that** the flaking pressure is the pressure between the flaking rollers (110) during the flaking process.

10. System (100), according to any one of Claims 5 to 9, **characterized in that** the flaking pressure is controlled through hydraulic actuators (122), which move the flaking rollers (110).

11. System (100), according to any one of Claims 5 to 10, **characterized in that** it also comprises valves (124) that control the flow of the hydraulic fluid to the hydraulic actuators (122), wherein the valves (124) are controlled by the PLC (130).

12. Grain flaking method, **characterized in that** it comprises the steps of:
obtaining (210) a pressure reference;
applying (220) a flaking pressure to a flow of grains, wherein the flaking pressure is defined through the pressure reference obtained; and
adjusting (230) the pressure reference if characteristics of the grain flakes are not compliant with the desired specifications, wherein the step of adjusting the pressure reference is handled continuously and automatically by the grain flaking system defined in any one of Claims 1 to 7.

13. Method, according to Claim 12, **characterized in that** the step of adjusting (230) the pressure reference is also performed based on values measured through pressure sensors, hopper feed speed, moisture content, temperature of the grain to be flaked, pressure or distance between the rollers, and vibration of mechanical parts.
